# EUROPEAN PATENT APPLICATION

(11) **EP 0 640 940 A2**
(43) Date of publication of application: **01.03.1995**
(21) Application number: 94202391.2
(22) Date of filing: 22.08.1994
(51) Int. Cl.: G06K 19/077

(54) **Contactless chip card**

(30) Priority: 23.08.1993 NL 9301457
(71) Applicant: N.V. Nederlandsche Apparatenfabriek NEDAP, NL-7141 DE Groenlo (NL)
(72) Inventor: de Jong, Willem Otto, NL-7103 HC Winterswijk (NL); Hakkers, Albert Jan, NL-7141 PP Groenlo (NL)
(74) Representative: Smulders, Theodorus A.H.J., Ir.

(57) **Abstract**

The invention relates to a card for contactless information transfer, such as an identification card or a smart card, comprising a housing accommodating a coil construction and an electronic circuit coupled to the coil construction. The housing is composed of two top layers and an intermediate layer interposed between the top layers and comprising the coil construction and the electronic circuit. Each top layer is attached to the intermediate layer through a bonding layer located between the relevant top layer and the intermediate layer and whose softening point is lower than the softening point of the top layers and the intermediate layer.

## Description

The invention relates to a card for contactless information transfer, such as an identification card or a smart card, comprising a housing accommodating a coil construction and an electronic circuit coupled to the coil construction, the housing being composed of two top layers and an intermediate layer interposed between the top layers and comprising the coil construction and the electronic circuit.

The invention also relates to a method for manufacturing a card for contactless information transfer, such as an identification card or a smart card, comprising a housing accommodating a coil construction and an electronic circuit coupled to the coil construction, the housing being composed of two top layers and an intermediate layer interposed between the top layers and comprising the coil construction and the electronic circuit.

Such a card is disclosed in Dutch patent application 9001180, where the coil construction and the electronic circuit are embedded in a plastic filling which is covered with a film on opposite sides. Such a card often cannot meet the flexibility requirements as laid down in ISO standard 10373. The top layers are attached to a coil construction which has been wound helically in a single layer from wire in the form of film, the turns being insulated from each other by means of glue, for instance. The top layers provide the card with transverse bracing, so that the turns, upon being bent, do not end up overlying each other, and thus a stable construction is provided.

The present invention, on the other hand, provides a card with a stable construction obtained in an entirely different manner, which card moreover meets the flexibility requirements referred to. The present invention further provides a card which enables a loose arrangement of the windings of the coil construction in the card. This last also promotes the possibilities of meeting the flexibility requirements as discussed hereinabove.

The characteristic feature of the card according to the invention is that each top layer is attached to the intermediate layer through a bonding layer located between the relevant top layer and the intermediate layer and whose softening point is lower than the softening point of the top layers and the intermediate layer.

Dutch patent application 9200835 discloses a card which is built up from a fairly large number of parts in order to realize a structure whereby the coil ends up in loose arrangement in the card. This is necessary to satisfy the flexibility requirements laid down in ISO standard 10373. This also entails the necessity of performing a large number of operations to manufacture the end product. For a simple production method, it is preferred to handle the coil as a separate part rather than winding it loosely so that it would fall apart without any additional provisions. This can only be realized if the coil has been wound in a sufficiently flat fashion, so that upon bending according to ISO 10373 the wires located at the top and bottom too remain within the elastic stretch range of the wire material. It has been found that in that case the thickness of the coil should be about 200-250 microns at a maximum. This also imposes limitations on the maximum allowable volume of the coil in the card and therefore the voltage and the power consumption of the electronic circuit should be reduced as far as possible as well in order to enable contactless information transfer over a sufficiently large distance.

A particular embodiment of the card for contactless information transfer is characterized in that the bonding layer consists of a plastic layer coextruded with the top layer and/or the intermediate layer.

A method for manufacturing a card for contactless information transfer as described in the preamble is characterized, according to the invention, in that at least one of the two top layers and/or the intermediate layer is provided with a bonding layer whose softening point is lower than the softening point of the top layers and the intermediate layer and that subsequently the top layer is attached to the intermediate layer through a lamination process.

According to a particular aspect of the invention, the bonding layer is coextruded together with the top layer and/or the intermediate layer before the lamination process is carried out. The advantage of such a method is that the card to be manufactured does not tend to warp during lamination as a result of differences in the coefficients of expansion of the different materials.

Hereinbelow the invention will be further explained with reference to the drawing. In the drawing:
Fig. 1 is a cross-section of an embodiment of a card according to the invention;
Fig. 2 is a top plan view of the card shown in Fig. 1 or Fig. 3; and
Fig. 3 is an alternative embodiment of a card according to the invention.

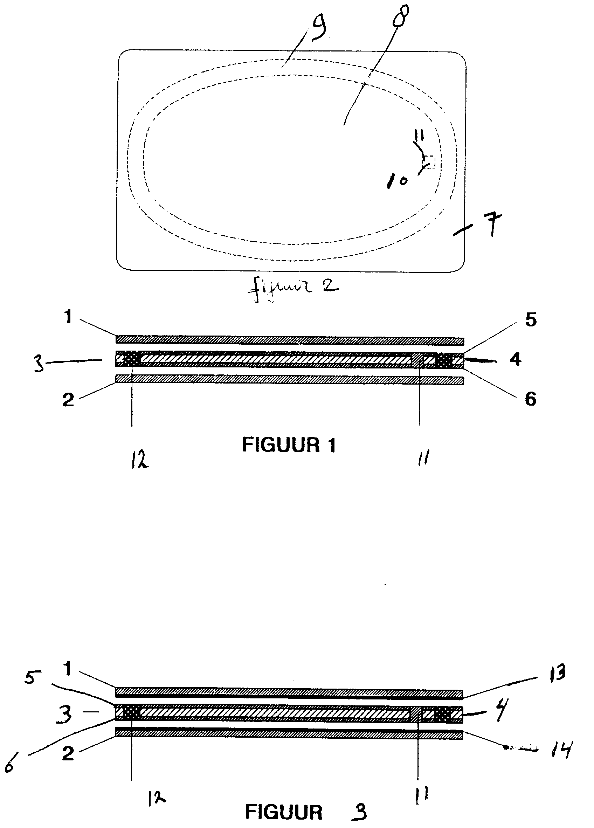

Figs. 1 and 2 show the construction of the card according the invention, which, in its simplest form, is built up from three layers of synthetic material 1, 4, 2, the coil construction and the electronic circuit (chips) being arranged in the middle layer 4. According to ISO standard 10536 the maximum total thickness of the contactless card shown is 760 microns ± 10%. The problem in assembling cards consisting of synthetic films with interposition of components made up of different materials is that during lamination the cards warp due to the differences in the coefficients of expansion of the different materials.

To avoid such warp, in the card shown in Fig. 1, use is made of synthetic materials 4 which have been coextruded with a different synthetic material 5, 6, which functions as a bonding layer for adhering the films 1, 2 onto the intermediate layer through a lamination process. Also, the card shown in Fig. 1 is constructed symmetrically to further prevent warp. The material of the thin bonding layer 5, 6 is chosen such that the softening point of these materials is lower by 10-20° than the softening point of the supporting layer 4. During the coextrusion process these synthetic materials are extruded against each other in softened condition, which yields a good bond at the interface of these materials. Fig. 1 shows top layers 1, 2 consisting, for instance, of polycarbonate (PC) and the intermediate piece 3, comprising the intermediate layer 4, similarly made of PC, for instance, coextruded with two bonding layers 5, 6. The bonding layers consist, for instance, of modified polyester (PETG) having a softening point about 10-20° lower than that of PC. The intermediate layer 4 consists of a first piece of film 7 provided with an opening and a second piece of film 8 fitted in the opening, a coil space 9 being formed between the first and second film pieces. Further, the second film piece is provided with an opening 10 accommodating an electronic circuit 11. Furthermore, a coil construction 12 (Fig. 1), connected with the electronic circuit, is accommodated in the coil space 9 with some clearance to allow for expansion differences due to temperature variations. In this example, the coil construction 12 (not shown in Fig. 2) consists of an insulated copper wire provided with a thermoadhesive or baking lacquer of polyamide (PA). The stability of such a coil construction is obtained by passing a current through turns of the coil construction after the winding operation, so that the coil construction is heated to the softening point of the PA lacquer. It is also possible to heat the coil construction with hot air during the winding operation. In both cases, the coil turns will, as it were, be baked to each other, so that the coil construction can be handled without auxiliary tools. The softening point of the baking lacquer is chosen such that it is much higher than the softening point of the bonding layers 5, 6 of the card. By means of a so-called bump-soldering process or thermocompression weld as described in applicant's Dutch patent application 9200396, the terminal ends of the coil are connected directly to the electronic circuit, so that no costly support materials are necessary. The leads of the coil construction 12 are so thin that they are forcibly sunk into the weak bonding layers 5, 6 during the lamination process in which the card is assembled. With the structure as shown in Fig. 1, it is further possible, subsequent to the lamination process in which the card has been assembled, to provide a printing on the outsides of top layers 1 and 2 and optionally to provide them with a hard protective lacquer layer.

An alternative embodiment of the card is shown in Fig. 3, where a printing 13, 14 has been provided mirrorwise on the inside of the top layers 1, 2. Fig. 2 shows a cross-section of the card shown in Fig. 3. In this examplary embodiment, the top layers 1, 2 have been manufactured from transparent material. To ensure that the top layers are sufficiently light-proof to avoid the coil construction 12 and the electronic circuit 11 being visible from the outside, the top layers 1, 2 may be composed of two layers, viz. a transparent layer provided with a printing 13, 14, for instance representing images, and a non-transparent layer applied thereto, functioning as a light barrier. For clarity, this non-transparent layer is not shown in the drawing.

In accordance with an alternative embodiment, this non-transparent layer is provided on the intermediate piece 3, followed by the application of the top layers 1, 2, as discussed above. The light barrier may also be formed by a covering printing, for instance white in color, which is provided on the images 13, 14. Thereafter, the top layers 1, 2 can be attached to the intermediate piece 3, as discussed above. It is also possible to provide a non-transparent layer on the intermediate piece 3, followed by the attachment of the top layers 1, 2 to the intermediate piece 3 through the lamination process referred to.

A thermally sensitive layer may additionally be provided on the outside of the top layers 1, 2, as described in Dutch patent application 9202226. This makes it possible to provide variable information on the card. Such a thermally sensitive coating can be written on by means of a thermal printer. It is also possible to erase the written information again through the supply of heat. As an alternative to the coextruded bonding layers described, it is, of course, also possible to use glue or bonding layers which are applied in a different manner but exhibit the same difference in softening or processing temperatures. The bonding layers 5, 6 provided on the intermediate layer 4 in fact constitute a single intermediate piece 3 accommodating the coil construction and the switching electronics. According to the embodiment of Figs. 1 and 2, the coil construction 12 and the electronic circuit 11 are located entirely within the contours of the intermediate piece 3, i.e., within the contours of the intermediate layer 4 and the bonding layers 5, 6 provided thereon. More particularly, the electronic circuit 11 and the coil construction 12 are located entirely within the contours of the intermediate layer 4, i.e., the intermediate layer excluding the bonding layers 5, 6 provided thereon.

According to another aspect of the invention, the bonding layers 5, 6 are coextruded with the top layers 1 and 2. Thereafter the top layers 1, 2, provided with bonding layers 5, 6, are attached to the intermediate layer 4 through the lamination process mentioned above. The end product will then be the same as the end product as described with reference to Fig. 1. Also, the top layers 1, 2 may each be provided on one side with a bonding layer through coextrusion, the intermediate layer 4 having been provided on one or both sides with a bonding layer through coextrusion. Thereafter the bonding layers so formed can be contacted with each other for attaching the top layers 1, 2 on opposite sides of the intermediate layer 4 to the intermediate layer 4. Thus the bonding layer of a top layer 1, 2 will be attached to a bonding layer of the intermediate layer 4, which bonding layers will soften during the lamination process and merge into a single shared bonding layer. This means that the finished product will consist of an intermediate layer 4 attached on opposite sides through a bonding layer, each bonding layer being attached to a top layer 1, 2. As an alternative to the coextruded bonding layers described, it is also possible to use glue or bonding layers which have been provided in a different manner but exhibit the same difference in softening or processing temperatures. The bonding layer may also consist of a thermotransfer layer.

According to yet another aspect of the invention, the coil construction 12 and the space 9 are mutually adjusted, in such a manner that the coil construction is accommodated in the housing of the card, i.e., in space 9, with some clearance. This provides the advantage that temperature variations will not give rise to tensions between the coil construction on the one hand and the housing of the card on the other. The film piece 7 and the film piece 8 can be formed from the film material in question through a punching operation. Preferably, the coil construction is connected directly to the electronic circuit (chip) through a thermocompression weld, so that no support material of the chip is necessary.

According to another variant of the invention, the electronic circuit 11 is accommodated in an opening (not shown) of the film piece 7.

These and other obvious variants are understood to fall within the scope of the invention.

## Claims

1. A card for contactless information transfer, such as an identification card or a smart card, comprising a housing accommodating a coil construction and an electronic circuit coupled to the coil construction, the housing being composed of two top layers and an intermediate layer interposed between the top layers and comprising the coil construction and the electronic circuit, characterized in that each top layer is attached to the intermediate layer through a bonding layer located between the relevant top layer and the intermediate layer and whose softening point is lower than the softening point of the top layers and the intermediate layer.

2. A card according to claim 1, characterized in that the bonding layer consists of a plastic layer coextruded with the top layer and/or the intermediate layer.

3. A card according to claim 1, characterized in that the bonding layer consists of glue.

4. A card according to claim 1 or 3, characterized in that the bonding layer consists of a thermotransfer layer.

5. A card according to any one of the preceding claims, characterized in that the coil construction and a coil space in the housing in which the coil construction is located are mutually adjusted, in such a manner that the coil construction is accommodated in the coil space with some clearance, in such a manner that no tensions arise between the coil construction and the housing upon temperature variations.

6. A card according to claim 5, characterized in that the intermediate layer consists of a first film piece provided with an opening and a second film piece fitted in the opening, the coil space being formed between the first and second film pieces.

7. A card according to claim 6, characterized in that the first and/or second film piece is provided with an opening in which the electronic circuit is accommodated.

8. A card according to any one of the preceding claims, characterized in that the turns of the coil construction are provided with a thermoadhesive or baking lacquer with a softening point higher than the softening point of said bonding layers.

9. A card according to any one of the preceding claims, characterized in that the coil construction is attached directly to a chip of the electronic circuit through a thermocompression weld.

10. A card according to any one of the preceding claims, characterized in that the coil construction and the electronic circuit are accommodated within the contours of the intermediate layer.

11. A card according to any one of the preceding claims, characterized in that the coil construction and the electronic circuit are accommodated within the contours of the intermediate layer with bonding layers.

12. A card according to any one of the preceding claims, characterized in that at least one of the top layers consists of a film of transparent material having images printed thereon on the side facing the intermediate layer.

13. A card according to claim 12, characterized in that a light barrier is present between the printing and the intermediate layer, so that the coil construction and the electronic circuit are not visible through the transparent top layer.

14. A card according to claim 13, characterized in that the light barrier is formed by a covering printing.

15. A card according to claim 13, characterized in that the light barrier is formed by a non-transparent plastic layer located between the top layer and the intermediate layer.

16. A card according to any one of the preceding claims, characterized in that on the outside of at least one top layer a thermally sensitive coating has been provided which can be written on by means of, for instance, a thermal printer, and which can also be erased through heat supply.

17. A method for manufacturing a card for contactless information transfer, such as an identification card or a smart card, comprising a housing accommodating a coil construction and an electronic circuit coupled to the coil construction, the housing being composed of two top layers and an intermediate layer interposed between the top layers and comprising the coil construction and the electronic circuit, characterized in that at least one of the two top layers and/or the intermediate layer is provided with a bonding layer whose softening point is lower than the softening point of the top layers and the intermediate layer and that subsequently the top layer is attached to the intermediate layer through a lamination process.

18. A method according to claim 17, characterized in that each top layer is attached to the intermediate layer through a bonding layer by means of the lamination process.

19. A method according to claim 17 or 18, characterized in that the lamination process is carried out at a temperature above the softening point of the bonding layer and below the softening point of the intermediate layer and the top layer.

20. A method according to any one of claims 17-19, characterized in that at least the top layer or the intermediate layer is coextruded together with the bonding layer before the lamination process is carried out.

21. A method according to claim 20, characterized in that not only the intermediate layer is coextruded together with a first bonding layer but also the top layer is coextruded together with a second bonding layer before the first and second bonding layers are bonded to each other through the lamination process.

22. A method according to claim 20, characterized in that the intermediate layer is coextruded together with two bonding layers, so that the intermediate layer is provided with a bonding layer on opposite sides thereof before a top layer is atttached on each side of the intermediate layer through the lamination process.

23. A method according to claim 20, characterized in that each top layer is coextruded together with a bonding layer before these top layers are attached to the intermediate layer through the lamination process.
